# EUROPEAN PATENT APPLICATION

(11) **EP 4 804 051 A1**
(43) Date of publication of application: **09.09.2026**
(21) Application number: 25161341.0
(22) Date of filing: 03.03.2025
(51) Int. Cl.: G06F 16/55, G06F 16/583, G06N 3/00

(54) **SYSTEM AND METHOD FOR AUTOMATED DOMAIN ADAPTATION IN MEDICAL IMAGING**

(71) Applicant: Centre Hospitalier Universitaire Vaudois, 1011 Lausanne (CH); Siemens Healthineers AG, 91301 Forchheim (DE)
(72) Inventor: Di Noto, Tommaso, 1006 Lausanne (CH); Bach Cuadra, Meritxell, 1018 Lausanne (CH); Hagmann, Patric, 1066 Epalinges (CH); Maréchal, Bénédicte, 1040 Echallens (CH); Richiardi, Jonas, 1202 Genève (CH)
(74) Representative: Fischer, Michael

(57) **Abstract**

The invention relates to a system (200) and a method (300) for automated Domain Adaptation, hereafter "DA", determination for a Deep Learning, hereafter "DL", model trained on a training dataset of a source domain, hereafter "D_{S}", and that has to be applied on a target dataset of a target domain, hereafter "D_{T}", wherein the DL model is characterized by an encoder-decoder architecture, wherein the "trained" DL model refers hereafter to the DL model trained on D_{S}, wherein D_{S} and D_{T} differ in that they present a different distribution of data, the method (300) comprising:
- determining (302) if labels are available for D_{T}, i.e. if one or several labels are associated to one or several data of D_{T}, wherein each label associated to a data is configured for providing a context to that data for enabling the DL model to learn from it, enabling thus to train the DL model on the labeled data;
- if labels are available for D_{T}, then automatically launching(303) an evaluation of N supervised domain adaptation, hereafter "SDA", methods, with N ≥ 2, wherein said evaluation of the N SDA methods comprises an iterative testing process configured for testing the N SDA methods on a first test dataset of D_{T}, and automatically selecting the best-performing SDA method among said N SDA methods for the DA of the trained DL model with respect to D_{T}, wherein the first test dataset comprises at least part of the labeled data of D_{T};
- otherwise, if labels are not available for D_{T}, then automatically selecting (304) an unsupervised domain adaptation, hereafter "UDA" for handling said target dataset.

## Description

### Technical Field

The present disclosure concerns, in general, transfer learning (TL) in the framework of machine learning (ML) techniques, notably in connection with medical imaging. More specifically, the present disclosure concerns Deep Learning (DL) algorithms used in medical imaging and the problematic of domain adaptation caused by a difference in the data distribution between source data used for training a ML/DL algorithm and target data to which the trained ML/DL needs to be applied.

### Background Art

In recent years, DL algorithms have become the "de facto" standard for numerous classification/segmentation/detection tasks in medical imaging [1]. However, one major downside of DL models is that they yield lower performances when applied to out-of-distribution data, a phenomenon known as domain shift. To mitigate the different domain-shifts in medical imaging (e.g., model trained on scanner from vendor A that underperforms on scanner from vendor B), several techniques have been proposed in the literature which go under the umbrella term of domain adaptation (DA) [2]. The broad field of DA can be further divided in supervised domain adaptation (SDA), and unsupervised domain adaptation (UDA). In the former scenario, the DL practitioners have access both to labeled data of the source domain (D_{S}) and to labeled data of the target domain (D_{T}), while in the latter they have access to labeled D_{S} data, but only to unlabeled data from D_{T}. One example of the SDA scenario is the following:
a) The user has trained a DL model that segments brain tumors on subjects that were scanned with a 3T Magnetic Resonance (MR) scanner from vendor V_{S} in hospital A (source domain, D_{S}).
b) Training is successful and when the model is tested on new subjects scanned with the same MRI scanner the model achieves satisfactory performances which are sufficient for clinical decision support.
c) Then, the user would like to deliver the model to another hospital (target domain, D_{T}) in which patients are scanned with an MRI scanner from vendor V_{T}. Without any change/adjustment, the model will most likely underperform on the new images.
d) The second hospital (i.e., the one with the V_{T} scanner) provides the user an annotated dataset (e.g., with manual annotations of brain tumors) and asks the user to maximize performances on this new target dataset of D_{T}.

According to the paper of Wang et al. [6], this scenario goes under the category of heterogeneous (i.e. different feature space between D_{S} and D_{T}), one-step (the domains are close enough such that one knowledge adaptation step is sufficient) DA. Both in supervised and unsupervised DA scenarios, several approaches are possible to increase performances on D_{T}. However, there is a lack of consensus regarding which DA approach is the most effective, with most of the works trying several combinations empirically [3]. Additionally, in medical imaging, there are often a lack of labeled data, which means that a retraining would be time-consuming, typically requiring manual labeling of a new set of training data specifically made for D_{T}, which is not always feasible.

Therefore, there is a need for a solution that would automatically determine, for a given DL algorithm trained on a D_{S}, an optimal DA technique for TL that would provide optimal results when applying the DL algorithm to a D_{T}, i.e. that would maximize the performance of the DL algorithm on D_{T}, notably in the field of medical imaging, avoiding therefore manual, empirical, and potentially suboptimal trials for determining a DA.

### Summary of Invention

An objective of the present invention is to propose a method and a system for automated DA determination for a DL model trained on a D_{S} and that has to be applied on a dataset of a D_{T}, wherein D_{T} differs from D_{S} in that they do not share a same data distribution.

Said objective is achieved according to the present invention by a method and a system for automated DA determination according to the independent claims. Dependent claims present further advantages of the invention.

The present invention proposes thus a method for automated DA determination for a DL model trained on a training dataset of a D_{S}, and that has to be applied on a target dataset of a D_{T}, wherein the DL model is characterized by an encoder-decoder architecture typically comprising an encoder for encoding input data into a numerical representation through one or several encoding layers, and a decoder for decoding said numerical representation through one or several decoding layers to produce an output that is the output of the DL model. Said encoding and decoding layers are referred to as "layers" hereafter, and the "trained" DL model refers hereafter to the DL model trained on D_{S}, wherein D_{S} and D_{T} differ in that they present a different distribution of data. The method according to the invention comprises:
- optionally, receiving or acquiring the target dataset;
- determining if labels are available for D_{T}, i.e. if one or several labels are associated to one or several data of D_{T}, wherein each label associated to a data is configured for providing a context to that data for enabling the DL model to learn from it, enabling thus to train the DL model on the labeled data;
- if labels are available for D_{T}, then automatically launching an evaluation of N supervised domain adaptation, hereafter "SDA", methods, with N ≥ 2, wherein said evaluation of the N SDA methods comprises an iterative testing process, which typically comprises N-1 iterations, configured for testing the N SDA methods on a first test dataset of D_{T}, and automatically selecting the best-performing SDA method among said N SDA methods for the DA of the trained DL model with respect to D_{T}, wherein the first test dataset comprises at least a part of the labeled data of D_{T}. Preferentially, said first test dataset is the target dataset;
- otherwise, if no label is available for D_{T}, then automatically selecting an unsupervised domain adaptation, hereafter "UDA" for handling said target dataset and mitigating performance degrade due to domain shift.

The present invention concerns also a system for automated DA determination, the system comprising:
- a control unit configured for acquiring or receiving a target dataset to be analyzed by means of a DL model;
- an interface for providing a result of an analysis of the target dataset based on a use of the DL model;
said system being characterized in that its control unit is configured for carrying out the steps of the method according to the invention.

### Description of Embodiments

The present invention proposes an automated determination of a DA when an analysis of target data requires applying a DL model or algorithm to said target data, while the latter belong to a D_{T} that is shifted (in terms of underlying data distribution) with respect to a D_{S} on which the DL model has been trained. In particular, the proposed invention enables to automatically identify the DA that will optimize or maximize the performances of the DL model on D_{T} once said DL model has been trained on D_{S}. The DL model according to the invention comprises at least said encoding and decoding layers, and may further comprise additional layers, like one or more bottleneck layer(s), and/or one or more normalization layer(s) (e.g. Batch Normalization). The DL model according to the invention is typically configured for performing one or several of the following technical tasks: an image segmentation, an image classification, an image detection and/or localization, an anomaly detection (e.g. an out-of-distribution detection), an image registration. Of course, the DL model according to the invention is not only limited to the previously cited tasks, and might performed other known in the art technical tasks. The disclosed DA determination may fit to any domain-shift scenario by combining several supervised and unsupervised DA. Indeed, regardless of the availability and/or type of labels associated to data of D_{T}, the presented method enables to automatically select the best/optimal DA approach.

Preferably, several SDA methods are tested for determining which one will provide the best results on D_{T} when applied to the trained DL model. In particular, at least two of the following SDA methods are tested during the iterative testing process:
a. a first SDA method that is or comprises a finetuning of one or more layers of the encoder of the trained DL model by further training the trained DL model on the first test dataset of D_{T}, while keeping the decoder of the trained DL model free of any training on labeled data of D_{T};
b. a second SDA method that is or comprises a finetuning of one or more layers of the decoder of the trained DL model by further training the trained DL model on the first test dataset of D_{T}, while keeping the encoder of the trained DL model untrained/frozen, i.e. free of any training, on labeled data of D_{T};
c. a third SDA method that is or comprises a finetuning of one or more batch normalization, hereafter "BN", layers, preferentially all BN layers, of the trained DL model by further training the trained DL model on the first test dataset of D_{T} if the DL model layers comprise any BN layer;
d. a fourth SDA method that is or comprises a finetuning of all layers of the trained DL model by further training the trained DL model on the first test dataset of D_{T};
e. a fifth SDA method that is or comprises a mixed training of the untrained DL model (i.e. that is still free of any training on D_{S} and/or D_{T}) on a training dataset comprising labeled data of D_{S} and part or all said labeled data of D_{T}.

Preferably, N=5, and the five above-mentioned SDA methods are evaluated during said iterative testing process.

In particular, the iterative testing process starts with a first step wherein a performance of each of the N SDA methods is tested on the first test dataset of D_{T} and the worst performing SDA method is removed from the iterative testing process (notably from all next iterations of the iterative testing process), and at each next step of the iterative testing process, the number of training epochs is increased and the performance of each of the remaining SDA methods is tested again on the first test dataset of D_{T}, the worst performing SDA method among the remaining SDA methods being removed at each iteration of the iterative testing process until it remains only a single SDA method that is the best-performing SDA method. For testing the performance of the SDA methods at each iteration of the iterative testing process, the present invention proposes notably to perform an X-fold cross-validation. The worst SDA method is then the one with average lowest performance across the X-fold cross-validation on said first test dataset.

Said X-fold cross-validation is performed on the so-called first test dataset of D_{T}. It ensures robustness of the selection of the best SDA method. Instead of evaluating the DL model on the entire first test dataset at once according to the chosen SDA method, said first test dataset is divided into X equal parts, and the DL model is trained on X-1 of these parts according to said chosen SDA method, and tested then on the remaining one, wherein said process is repeated X times, each time using a different one of said parts for the testing. This helps ensuring that the evaluation of the SDA approaches is not biased by a particular choice of test data, providing therefore a more reliable measure of the performance of the chosen SDA approach. Preferably, said X-fold cross-validation is a 5-fold cross-validation to keep computation time reasonable.

Preferentially, said UDA is a (2D- or 3D-) Deep Subdomain Adaptation Network-like approach, hereafter "DSAN-like approach", to be applied to the trained DL model if the DL model is configured for performing a classification or a regression task, or a (2D- or 3D-) Synergistic Image and Feature Alignment-like approach, hereafter "SIFA-like approach", to be applied to the trained DL model if the DL model is configured for performing a segmentation task, or otherwise, if the DL model is neither configured for performing a segmentation task, nor a classification or regression task, then the method further comprises stopping the DA determination and automatically providing a message related to said stopping via an interface, and indicating notably that the DA failed.

Preferably, if labels are available for D_{T}, then the best-performing SDA method is used for adapting the trained DL model to create an adapted DL model, called hereafter "SDA-adapted" DL model, to be applied on the target dataset. Otherwise, if labels are not available for D_{T}, then the DSAN-like approach is applied to the above-mentioned DL model trained on D_{S} to mitigate domain shift on the target dataset if the DL model is configured for performing a regression or classification, and creating therefore a DSAN-adapted DL model, or the SIFA-like approach is applied to the trained DL model to create a SIFA-adapted DL model if the DL model is configured for performing a segmentation. The SIFA-like approach involves both an image alignment of the labeled D_{S} to the target dataset (i.e. an alignment of the source data distribution on the distribution of the data of the target dataset), and an enforced feature alignment during training/finetuning of the trained DL model to combat the remaining domain shift. Otherwise, if no labels are available for D_{T} and the DL model is not configured for performing a regression or classification or segmentation, then said message is provided, for instance sent to a user via the interface of the system according to the invention, indicating that a domain adaptation was not possible or failed.

Preferably, the method further comprises performing an analysis of the target dataset by applying the SDA-adapted DL model to the target dataset if labels were available for D_{T}, otherwise applying the DSAN- or SIFA-adapted DL model to the target dataset, whichever has been created, and outputting a result of said analysis of the target dataset.

In particular, as part of said evaluation of N SDA methods, the present invention further proposes to compare an output of the SDA-adapted DL model to an output of the trained DL model when both the SDA-adapted DL model and the trained DL model receive as input a second test dataset of D_{T}, which can be the same as said first test dataset, and selecting the DL model among said SDA-adapted DL model and trained DL model characterized by the highest performance as the one to be applied to the target dataset to avoid negative knowledge transfer. As for the first test dataset, the second test dataset comprises labeled data of D_{T}. This enables to ensure that the knowledge transfer for the chosen best-performing SDA method is not detrimental.

### Brief Description of the Drawing

For a more complete understanding of the present disclosure, and the advantages thereof, reference is now made to the following descriptions taken in conjunction with the accompanying drawings, wherein like numbers designate like objects, and in which:
Fig. 1 illustrates an example of domain adaptation;
Fig. 2 illustrates a preferred embodiment of a system according to the invention;
Fig. 3 illustrates a flowchart of a method according to the invention.

### Description of Examples

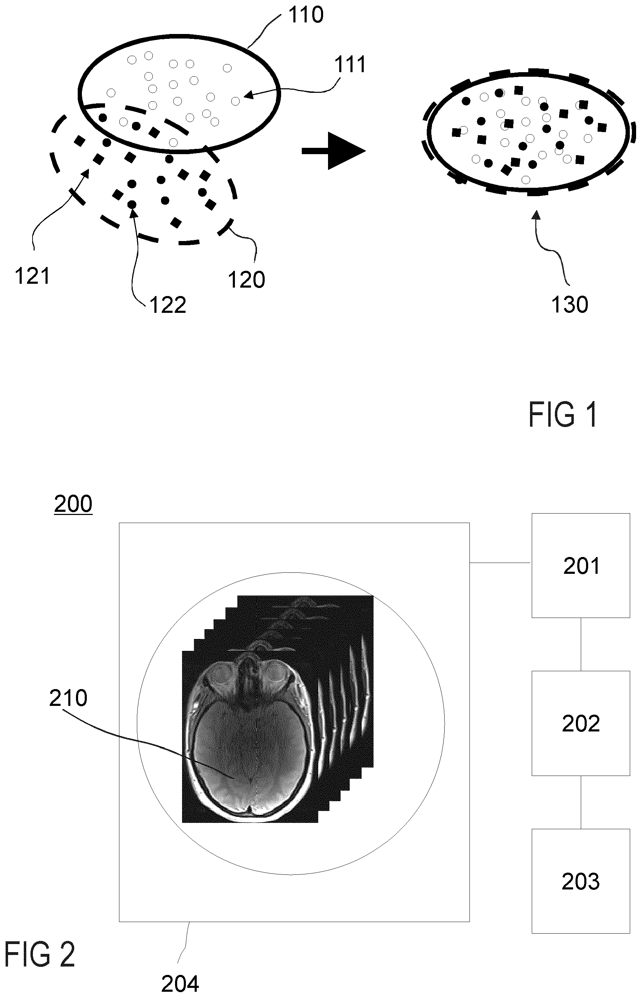

Figure 1 schematically illustrates a DA. On the left-hand side, a training set of data 111 of a source domain D_{S} 110 has been used to train a ML algorithm, e.g. a DL model or algorithm. In Fig. 1, the data 111 of the training dataset are represented by empty black dots. D_{S} 110 comprises source data (notably the data of the training dataset) which has a first distribution.

Typically, D_{S} may comprise medical images acquired with a medical device, e.g. a MR imaging apparatus, of a first hospital. A DL model has been trained on the D_{S} and is used for analyzing the images acquired by said medical device. The problem at the origin of the present invention is related to the transfer of the knowledge acquired on D_{S} (for analyzing its data) to another domain, called the target domain D_{T} 120, which is characterized by a distribution of data that is different from the distribution of data of D_{S} 110. For instance, the data of D_{S} might have been acquired for a set of biological samples characterized by a source feature distribution and the data of D_{T} may have been acquired for a set of biological samples characterized by a target feature distribution which is different/disjoint from the source one. The differences in data distribution between D_{S} and D_{T} can come from various sources: for instance, modality (e.g. D_{S} comprises MR data, and D_{T} comprises Computer Tomography (CT) or ultrasound data), scanner (e.g. D_{S} acquired via a MAGNETOM Prisma scanner vs. D_{T} acquired via a MAGNETOM Sola scanner), field strength (D_{S} acquired at 3T vs. D_{T} at 7T), acquisition protocol (D_{S} being compressed-sensing reconstructed, while D_{T} being reconstructed with a DL method), contrast agent (for D_{S} the contrast agent was injected, while not for D_{T}), differences in patient demographics (D_{S} concerns for healthy newborns, while D_{T} concerns elderly with a disease), etc.

In Fig. 1, an example of D_{T} is shown, wherein D_{T} comprises two different sets of data, namely a first set of data 121 represented by full black squares, and a target set of data 122 represented by full black dots. Preferentially, the first set of data 121 and the target set of data 122 have the same or similar distribution, which corresponds to the data distribution characterizing D_{T}. Typically, the skilled person would like to transfer the knowledge (for data analysis) acquired on D_{S} for the analysis of the data of the target dataset of D_{T}. Different methods for transferring said knowledge are known, but based on manual and/or empirical trials, yielding to not optimal results. For instance, in order to apply the DL model trained on D_{S} to the data of D_{T}, a domain adaptation DA might be required, which, as exemplified in Fig. 1, results in a shift of D_{T} as represented by ref. 130 on the right-hand side of Fig. 1. However, no method at the moment enables to automatically identify which would be the best approach for a DA. By best approach, one understands the DA that would maximize or optimize the performance on D_{T} when having knowledge of a DL model trained on D_{S}.

In this context, the present invention proposes a system 200 and a method 300 for automated DA determination. The system 200 according to the invention is schematically illustrated in Fig. 2. It comprises a control unit 201 configured for acquiring a target dataset to be analyzed by a DL model that has been trained on a D_{S}. Said control unit may also acquire one or several datasets of the D_{S} as well as one or several datasets of the D_{T} to which said target dataset belongs to. The control unit 201 preferentially comprises a processor and a memory. Said memory might be used by the control unit 201 for storing said target dataset, and/or any of the datasets comprised in D_{S} and/or D_{T}. The system 200 further comprises an interface 202 for providing a result of an analysis of the target dataset based on a use of the DL model. Said interface 202 may comprise a display 203 for displaying said result. Preferentially, the control unit 201 is connected to a device configured for acquiring said target dataset. Said device might be for instance an imaging apparatus 204 configured for acquiring said target dataset that needs to be analyzed through the DL model. Said target dataset might be medical images of an object 210, typically a biological object, e.g. a brain. The distribution of the data of the target dataset differs from the distribution of the data that have been used for training the DL model, strongly decreasing the analysis performance of the trained DL model when directly applied to the target dataset. In order to provide a relevant analysis of the target dataset, the system 200 according to the invention is configured for carrying out the method according to the invention.

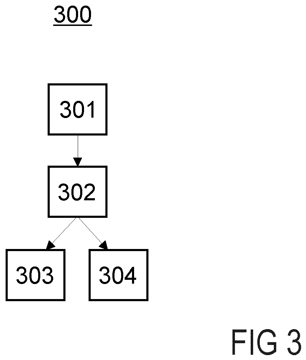

A preferred embodiment of said method will be now described in more detail in connection with Figure 3, wherein the different steps of the method 300 might be carried out by the system 200 previously described. The described method is preferentially a computer-implemented method.

At step 301, the system 200, notably its control unit 201, may acquire or receive or have access to said target dataset comprising data belonging to D_{T}. Optionally, the system may also acquire or receive D_{S}, notably a training dataset of D_{S} that has been used for training the DL model. Further, the system may acquire, receive, or have access to the DL model, notably the trained DL model. The target dataset comprises data that need to be analyzed by applying the DL model to them. The data of the target dataset belongs to D_{T}, and the system 200, notably control unit 201, has typically access to other data belonging to D_{T}. For instance, D_{T} may comprise several sets of medical images acquired for different biological samples. Among said several sets, at least one set (i.e. said target dataset) needs to be analyzed through the DL model.

At step 302, the system 200, notably its control unit 201, automatically determines if labels (typically ground truth information) are available for D_{T}. For this purpose, the control unit 201 may determine if one or several data of D_{T} are each associated to a label. Each label is a complementary data belonging to D_{T} that is associated to the data itself. These can be, for instance, classification labels (such as one specific class for each biological sample in D_{T}) or segmentation labels (such as a manual or automatic voxel-wise masks for each sample in D_{T}). According to the present invention, D_{T} may comprise several datasets, having each an equivalent data distribution within D_{T} as schematically illustrated in Fig. 1, and the system 200 may determine whether at least one of said datasets is a set of labeled data. Depending on the result of step 302, two different pipelines, which are embodied by steps 303 and 304, might be followed.

At step 303, if labels are available for D_{T}, then the system 200, notably its control unit 201, automatically launches an evaluation of N SDA methods, with N ≥ 2. Preferentially, said N SDA methods comprise four deep SDA methods (see for instance a)-d) mentioned above in the description of embodiments) and one shallow SDA method (see e) mentioned above in the description of embodiments). Of course, other SDA methods are contemplated. At step 304, if no label is available for D_{T}, then the system 200, notably its control unit 201, automatically selects a UDA for handling said target dataset, i.e. for adapting said trained DL model to reduce domain shift on D_{T}, creating a "UDA"-adapted DL model, like the SIFA- or DSAN-adapted DL model.

Preferentially, said evaluation of the N SDA methods comprises an iterative testing process. According to the latter, an iterative looping over the SDA methods is proposed, wherein at each iteration, the performances of the SDA methods are tested on D_{T}, preferentially through an X-fold cross-validation. In particular, for each next iteration, the number of training epochs for the evaluation is increased, while the worst SDA method (i.e. the one with average lowest performance, notably across the test folds of the X-fold cross-validation) is removed from the looping process. In other words, the SDA method which resulted in the average lowest performance at iteration "i" is removed from the evaluation that takes place at iteration "i+1". This enables to keep only the best-performing SDA methods for each next evaluation iteration. According to this iterative testing process, the system 200, notably its control module 201, is able to output the best-performing SDA method among the N SDA methods at the N-1 iteration step (or loop). The N SDA methods are tested on a first test dataset that belongs to D_{T}, wherein said first test dataset comprises part or all of the labeled data of D_{T}. Said first test dataset might be the target dataset, notably if each piece of data of the latter is associated to a label. Said label can be either manually (e.g. manually drew/indicated by a radiologist/physician/expert) or (semi-) automatically associated to each piece of data. An advantage provided by the looping over the SDA methods and progressively increasing the number of training epochs for the DL model is to reduce the computational complexity, increasing thus the efficiency of the system according to the invention. Preferentially, at each iteration, the number of training epochs might be doubled.

The system 200, notably its control unit 202, outputs thus, at the end of the evaluation process of the N SDA methods, notably at the end of its iterative testing process, the SDA method among said N SDA methods that is the best-performing SDA method. Preferentially, the system then automatically uses said best-performing SDA method for processing the target dataset. However, before using said best-performing SDA method for processing the target dataset, the system 200 may further automatically check whether said best-performing SDA method performs better than the trained DL model when applied to a same test dataset, e.g. to a same second test dataset (which can be the same as said target dataset or as the first test dataset). This ensures that the knowledge transfer for the best-performing SDA method is not detrimental (i.e. that there is no negative transfer learning), and that there is an effective gain in the performance when comparing the trained DL model and an SDA-adapted DL model obtained by applying said SDA method to said trained DL model. For this purpose, the system 200 is configured for automatically running an inference on said second test dataset of D_{T}, wherein the performance of the trained DL model (i.e. the DL model trained solely on D_{S}) and the performance of the SDA-adapted DL model are compared when they run on said second test dataset. At the end, the system 200 is configured for automatically selecting the DL model, among the trained DL model and the SDA-adapted DL model, that best performed during said inference, and preferentially further uses the latter for processing the target dataset.

If labels are not available for D_{T}, the system 200, notably its control unit 201, automatically selects either a DSAN-like [4] approach to be applied to the trained DL model in case of a classification or regression task to be performed by the DL model, or a SIFA-like [5] approach to be applied to the trained DL model in case of a segmentation task to be performed by the DL model, outputting respectively a DSAN-adapted DL model or a SIFA-adapted DL model. SIFA and DSAN networks are known in the art, as well as DSAN-like approaches or SIFA-like approaches which are based on the concepts disclosed in references [4] and [5]. Otherwise, if the DL model is neither configured for performing a segmentation task, nor a classification or regression task, then the system 200, notably its control unit 201, is configured for automatically stopping the DA determination and sending a message related to said stopping via an interface. By applying a UDA method or approach for handling the target dataset (or D_{T}), the system according to the invention will create a "UDA" adapted DL model which has domain-invariant features which are more robust to domain shift. The system is then preferentially configured for applying the UDA-adapted DL model to said target dataset for extracting meaningful results.

To conclude, the present invention proposes to combine in a smart way several DA techniques for automatically identifying, among the latter, the most successful DA technique for handling a target dataset of a target domain, wherein said target dataset needs to be processed by a trained DL model whose training has involved a training dataset of a source domain characterized by a data distribution that is different from the data distribution of the target domain. Typically, the present invention falls within the context and covers methods for analyzing one or several medical images by means of a DL model, wherein said one or several medical images come from a first source (e.g. a first imaging device, like a MRI apparatus) and form or are part of the so-called target domain, wherein the system according to the invention is typically capable of acquiring or receiving said medical images from said first source, wherein the DL model has been trained on a training dataset (e.g. a set of training medical images) acquired from a second source (e.g. a second imaging device, like another MRI apparatus) and that forms or is part of the so-called source domain, the presently disclosed invention enabling an automated DA for said DL model, enabling said method for analyzing one or several medical images to output for the latter an improved analysis compared to existing methods.

### List of citations

[1] Razzak, Muhammad Imran, Saeeda Naz, and Ahmad Zaib. "Deep learning for medical image processing: Overview, challenges and the future." Classification in BioApps: Automation of Decision Making (2018): 323-350.
[2] Guan, Hao, and Mingxia Liu. "Domain adaptation for medical image analysis: a survey." IEEE Transactions on Biomedical Engineering 69.3 (2021): 1173-1185.
[3] Kim, Hee E., et al. "Transfer learning for medical image classification: a literature review." BMC medical imaging 22.1 (2022): 69.
[4] Zhu, Yongchun, et al. "Deep subdomain adaptation network for image classification." IEEE transactions on neural networks and learning systems 32.4 (2020): 1713-1722.
[5] Chen, Cheng, et al. "Unsupervised bidirectional cross-modality adaptation via deeply synergistic image and feature alignment for medical image segmentation." IEEE transactions on medical imaging 39.7 (2020): 2494-2505.

## Claims

1. Method (300) for automated Domain Adaptation, hereafter "DA", determination for a Deep Learning, hereafter "DL", model trained on a training dataset of a source domain, hereafter "D_{S}", and that has to be applied on a target dataset of a target domain, hereafter "D_{T}", wherein the DL model is **characterized by** an encoder-decoder architecture, wherein the "trained" DL model refers hereafter to the DL model trained on D_{S}, the method (300) comprising:
- determining (302) if labels are available for D_{T}, i.e. if one or several labels are associated to one or several data of D_{T}, wherein each label associated to a data is configured for providing a context to that data for enabling the DL model to learn from it, enabling thus to train the DL model on the labeled data;
- if labels are available for D_{T}, then automatically launching (303) an evaluation of N supervised domain adaptation, hereafter "SDA", methods, with N ≥ 2, wherein said evaluation of the N SDA methods comprises an iterative testing process configured for testing the N SDA methods on a first test dataset of D_{T}, and automatically selecting the best-performing SDA method among said N SDA methods for the DA of the trained DL model with respect to D_{T}, wherein the first test dataset comprises at least part of the labeled data of D_{T};
- otherwise, if labels are not available for D_{T}, then automatically selecting (304) an unsupervised domain adaptation, hereafter "UDA" for handling said target dataset.

2. Method (300) according to claim 1, wherein the DL model comprises one or more bottleneck layer(s), and/or one or more normalization layer(s).

3. Method according to claim 1 or 2, wherein said UDA is a (2D- or 3D) Deep Subdomain Adaptation Network-like approach, hereafter "DSAN-like approach", to be applied to the trained DL model in case of a classification or regression task to be performed by the DL model, and resulting in a DSAN-adapted DL model to be applied to said target dataset, or a (2D- or 3D-) Synergistic Image and Feature Alignment-like approach, hereafter "SIFA-like approach", to be applied to the trained DL model in case of a segmentation task to be performed by the DL model, and resulting in a SIFA-adapted DL model to be applied to the target dataset, or otherwise, if the DL model is neither configured for performing a segmentation task, nor a classification or regression task, then the method comprises stopping the DA determination and automatically providing a message related to said stopping via an interface.

4. Method (300) according to one of the claims 1 to 3, wherein N = 5 and the five SDA methods comprise:
a. a first SDA method that comprises a finetuning of only the encoder of the trained DL model by further training the trained DL model on the first test dataset of D_{T}, while keeping the decoder of the trained DL model free of any training on labeled data of D_{T};
b. a second SDA method that comprises a finetuning of only the decoder of the trained DL model by further training the trained DL model on the first test dataset of D_{T}, while keeping the encoder of the trained DL model untrained on labeled data of D_{T};
c. a third SDA method that comprises a finetuning of all batch normalization, hereafter "BN", layers of the trained DL model by further training the trained DL model on the first test dataset of D_{T} if the DL model layers comprise any BN layer;
d. a fourth SDA method that comprises a finetuning of all layers of the trained DL model by further training the trained DL model on the first test dataset of D_{T};
e. a fifth SDA method that comprises a mixed training of the untrained DL model on a training dataset comprising labeled data of D_{S} and part or all said labeled data of D_{T}.

5. Method (300) according to claim 4, wherein only some layers of the encoder for the first SDA method and/or only some layers of the decoder for the second SDA method are finetuned.

6. Method (300) according to one of the claims 1 to 5, wherein the iterative testing process starts with a first step wherein a performance of each of the N SDA methods is tested on the first test dataset of D_{T} and the worst performing SDA method is removed from the iterative testing process, and at each next step of the iterative testing process, the number of training epochs is increased and the performance of each of the remaining SDA methods is tested again on the first test dataset of D_{T}, the worst performing SDA method among the remaining SDA methods being removed at each iteration of the iterative testing process until it remains only a single SDA method that is the best-performing SDA method.

7. Method (300) according to claim 6, comprising performing an X-fold cross-validation for testing the performance of the SDA methods at each iteration of the iterative testing process, the worst SDA method being the one with average lowest performance across the X-fold cross-validation on said first test dataset.

8. Method (300) according to one of the claims 1 to 7, wherein, if labels are available for D_{T}, then using the best-performing SDA method for adapting the trained DL model to create an SDA-adapted DL model to be applied on the target dataset, otherwise, if labels are not available for D_{T}, then applying a DSAN-like approach to the trained DL model to create a DSAN-adapted DL model if the DL model is configured for performing a regression or classification, or applying a SIFA-like approach to the trained DL model for creating a SIFA-adapted DL model if the DL model is configured for performing a segmentation, otherwise providing a message indicating that the DA failed.

9. Method (300) according to claim 8, comprising performing an analysis of the target dataset by applying the SDA-adapted DL model to the target dataset if labels were available for D_{T}, otherwise applying the DSAN- or SIFA-adapted DL model to the target dataset, whichever has been created, and outputting a result of said analysis of the target dataset.

10. Method (300) according to claim 8 or 9, comprising comparing an output of the SDA-adapted DL model to an output of the trained DL model when both the SDA-adapted DL model and the trained DL model receive as input a second test dataset of D_{T}, and selecting the DL model among said SDA-adapted DL model and trained DL model **characterized by** the highest performance as the one to be applied to the target dataset to avoid negative knowledge transfer.

11. System (200) for automated Domain Adaptation, hereafter "DA", determination for a Deep Learning, hereafter "DL", model trained on a training dataset of a source domain, hereafter "D_{S}", and that has to be applied on a target dataset of a target domain, hereafter "D_{T}", wherein the DL model is **characterized by** an encoder-decoder architecture, wherein the "trained" DL model refers hereafter to the DL model trained on D_{S}, the system (200) comprising:
- a control unit (201) configured for acquiring a target dataset to be analyzed by means of the DL model, said control unit (201) comprising a processor and a memory;
- an interface (202) for providing a result of an analysis of the target dataset based on a use of the DL model;
said system (200) being **characterized in that** its control unit (201) is configured for carrying out the steps of the method (300) according to one of the claims 1 to 10.

12. System (200) according to claim 11, wherein D_{T} comprises:
- images; and/or
- physical parameter measurement data for a biological object.

13. System (200) according to claim 11 or 12, wherein D_{T} comprises data acquired with a first imaging system and D_{S} comprises data acquired with a second imaging system different from the first imaging system.

14. System (200) according to claim 13, wherein said first imaging system and said second imaging system are magnetic resonance imaging apparatus.
